# FASCICULE DE BREVET EUROPEEN

(11) **EP 2 340 521 B1**
(45) Date de publication et mention de la délivrance du brevet: **30.03.2016**
(21) Numéro de dépôt: 09783814.8
(22) Date de dépôt: 07.10.2009
(51) Int. Cl.: G06Q 30/02, G06Q 30/00

(54) **PROCEDE DE CONVERSION ET CONVERTISSEUR DE FORMULE EN CODE EXECUTABLE, PROGRAMME ET SUPPORT D'ENREGISTREMENT POUR CE PROCEDE, PROCEDE D'IMPLEMENTATION DE CETTE FORMULE**
VERFAHREN ZUR UMSETZUNG UND UMSETZER ZUM UMSETZEN EINER FORMEL IN AUSFÜHRBAREM CODE, PROGRAMM UND AUFZEICHNUNGSMEDIUM FÜR DIESES VERFAHREN, VERFAHREN ZUR IMPLEMENTIERUNG DIESER FORMEL
METHOD OF CONVERSION AND CONVERTER FOR CONVERTING A FORMULA INTO EXECUTABLE CODE, PROGRAM AND RECORDING MEDIUM FOR THIS METHOD, METHOD OF IMPLEMENTING THIS FORMULA

(30) Priorité: 14.10.2008 FR 0856963
(43) Date de publication de la demande: 06.07.2011
(73) Titulaire: SAP SE, 69190 Walldorf (DE)
(72) Inventeur: BAR, Pascal, F-14790 Mouen (FR); JOUAN, Mehdi, 69190 Walldorf (DE); SAVALLE, Sébastien, F-14000 Caen (FR)
(74) Mandataire: Müller-Boré & Partner Patentanwälte PartG mbB
(86) Numéro de dépôt international: PCT/EP2009/063033
(87) Numéro de publication internationale: WO 2010/043526

(56) Documents cités:
- WO-A-02/08863
- WO-A-2004/016066

## Description

L'invention concerne un procédé de conversion ainsi qu'un convertisseur d'une formule de calcul en un code exécutable par une carte à puce. L'invention a également pour objet un programme d'ordinateur et un support d'enregistrement d'informations pour la mise en oeuvre de ce procédé. Enfin, l'invention a également pour objet un procédé d'implémentation de cette formule de calcul dans une carte à puce.

Les formules de calcul concernées sont des formules :
- ayant été acquises sous la forme d'une structure arborescente formée de noeuds reliés entre eux par des arcs, chaque noeud étant associé à une opération de calcul et les relations par arc définissant l'ordre dans lequel ces opérations de calcul doivent être réalisées, et
- ayant été enregistrées dans un format numérique structuré qui conserve la structure arborescente de la formule de calcul acquise,

Typiquement, cette structure arborescente contient au moins un noeud associé à une opération de branchement conditionnel paramétré et relié à au moins un premier et un deuxième noeuds fils de manière à ce qu'en fonction de la valeur d'un paramètre conditionnel, seule l'opération du premier noeud fils et, en alternance, seule l'opération du second noeud fils est exécutée.

Le noeud fils qui est associé à l'opération qui n'est pas exécutée et l'ensemble des noeuds qui ont ce noeud fils comme noeud parent sont appelés "branche morte".

Pour simplifier, la terminologie associée à une structure arborescente est ici définie dans le cas particulier où cette structure arborescente est orientée de la gauche vers la droite. Toutefois, cette terminologie peut facilement être adaptée à des structures arborescentes orientées différemment.

Une structure arborescente est définie comme étant une structure formée de noeuds reliés entre eux par des arcs. Dans cette structure, à l'exception d'un noeud racine, chaque noeud est relié du côté gauche à un seul noeud père. Du côté droit, chaque noeud est relié à aucun, à un seul ou à plusieurs noeuds fils. Un noeud est dit "noeud terminal" ou "terminaison" quand il est relié du côté gauche à un seul noeud père et à aucun noeud fils du côté droit. Un noeud terminal forme ainsi la fin d'une branche de la structure arborescente.

Les descendants d'un noeud parent sont l'ensemble des noeuds reliés du côté gauche directement à ce noeud parent ou par l'intermédiaire d'un ou plusieurs autres noeuds.

La demande de brevet WO 2004/016066 déposé au nom de la société Highdeal décrit un éditeur de formules de calcul apte à :
- acquérir une formule de calcul sous la forme d'une structure arborescente, et
- enregistrer la formule de calcul acquise dans un fichier XML (eXtensible Markup Language).

Ces formules de calcul définies sous la forme d'une structure arborescente permettent de définir de façon simple des formules de calcul très complexes. Ces formules de calcul sont complexes car elles comportent de très nombreux paramètres dont les valeurs sont inconnues au moment de leur définition.

Une formule de calcul peut être utilisée pour calculer le coût d'un service ou un prix. Dans ce cas, cette formule de calcul est désignée ici sous le terme d' « offre tarifaire ».

Typiquement, une offre tarifaire comporte des paramètres de souscription. Les valeurs de ces paramètres de souscription sont uniquement connues au moment de la souscription, c'est-à-dire au moment où un consommateur s'abonne à l'offre tarifaire définie par un fournisseur de service. Après s'être abonné à une offre tarifaire, ce consommateur est nommé « client». Par exemple, les paramètres suivants sont des paramètres de souscription : l'âge du client, le lieu de résidence du client, les options tarifaires choisies, son numéro de téléphone, ...etc.

Une offre tarifaire comprend aussi fréquemment des paramètres d'historique de consommation stockés dans des compteurs. Les valeurs de ces compteurs ne sont connues qu'au fur et à mesure de la consommation du service tarifié par cette offre. Par exemple, une offre tarifaire peut comporter un tarif dégressif en fonction de l'historique des consommations ou encore des réductions tarifaires attribuées en fonction des quantités précédemment consommées.

L'éditeur décrit dans la demande de brevet WO 2004/016066, permet de définir simplement de telles offres tarifaires.

Ensuite, le fichier XML contenant l'offre tarifaire ainsi éditée est utilisé par un système électronique de valorisation. Ce système de valorisation contient pour chaque client de cette offre tarifaire :
- le fichier XML contenant l'offre tarifaire,
- la valeur des paramètres de souscription et, éventuellement, d'historique de consommations, et
- une ou plusieurs balances dans lesquelles sont accumulés les coûts du ou des services consommés.

A chaque fois que le client consomme le service, un ticket de consommation est envoyé au système de valorisation. Ce ticket de consommation contient :
- des données de consommation qui caractérisent l'usage qui a été fait du service, et
- un identifiant du client qui consomme le service.

Par exemple, les données de consommation contiennent le volume ou la quantité de service consommé ainsi que d'autres informations telles que la date et l'heure de consommation du service.

En réponse à la réception du ticket de consommation, le système de valorisation parcourt l'offre tarifaire du noeud racine vers les terminaisons pour calculer le coût du service consommé. Pour cela, il utilise, en plus des données de consommation, la valeur des paramètres de souscription et d'historique de consommation de ce client. Le coût du service ainsi calculé est ensuite accumulé sur la balance du client.

La balance du client peut être un compte prépayé. Dans ce cas, l'accumulation du coût du service consiste à décrémenter le montant initial de la balance du coût calculé à chaque fois que le service est consommé jusqu'à épuisement du crédit sur ce compte prépayé. A l'inverse, la balance peut être un compte à crédit. Dans ce cas, l'accumulation des coûts sur la balance consiste à ajouter le coût calculé aux précédents coûts calculés. Le montant total indiqué par la balance est alors facturé de temps en temps avant que cette balance ne soit remise à zéro.

Le système de valorisation calcule les coûts pour l'ensemble des services consommés et pour l'ensemble des clients. Ainsi, étant donné la charge de travail que cela représente pour le système de valorisation, la charge de calcul en temps réel du coût d'un service croît avec le nombre de clients et de services à valoriser. De plus, le calcul du coût d'un service suppose la réception par le système de valorisation de tickets de consommation. Or, ces tickets de consommation sont transmis par un point de vente ou un terminal mobile au système de valorisation par l'intermédiaire d'un réseau. Ainsi, le calcul du coût d'un service est impossible en l'absence de connexion réseau.

Pour remédier à ces problèmes, dans le cas particulier des appels téléphoniques, il a déjà été proposé de calculer le coût des appels téléphoniques dans le téléphone mobile en embarquant dans ce téléphone mobile une application de calcul de coût (voir par exemple WO 02/08863). Il a même déjà été suggéré d'implémenter l'offre tarifaire dans une carte à puce reliée au téléphone mobile.

Toutefois, une offre tarifaire telle que celle développée avec l'éditeur décrite dans la demande WO 2004/016066 ne peut pas être implémentée dans la carte à puce. En effet, cela reviendrait à embarquer dans la carte à puce de chaque client :
- le système de valorisation décrit ci-dessus,
- chaque offre tarifaire auquel le client a souscrit,
- la valeur de chaque paramètre de souscription et d'historique de consommation.

Or le jeu d'instructions et la mémoire d'une carte à puce sont beaucoup plus limités que ceux d'un ordinateur de type PC ou serveur. Ainsi, il s'est avéré que :
- le jeu d'instructions nécessaire pour implémenter le système de valorisation dans la carte à puce était trop limité,
- la taille du code exécutable correspondant au système de valorisation ne pouvait pas être réduite à une taille suffisamment petite pour être embarquée dans une carte à puce, et
- le nombre de paramètres des offres tarifaires était souvent trop élevé pour pouvoir être implémenté dans une carte à puce.

L'invention vise à remédier à cet inconvénient en proposant un procédé de conversion d'une formule de calcul, acquise sous la forme d'une structure arborescente, en un code exécutable par une carte à puce qui permet l'implémentation dans la carte à puce, au moins dans certains cas, de formules de calcul impliquant un jeu d'instructions trop complexe pour être mis en oeuvre dans la carte à puce ou un nombre de paramètres trop élevé pour être accepté par une carte à puce.

Elle a donc pour objet un procédé de conversion d'une telle formule de calcul en un code exécutable par une carte à puce tel que défini par la revendication 1.

La compilation de la formule de calcul amputée de la branche morte permet à la fois de réduire le nombre de paramètres utilisés par la formule de calcul et également la complexité de celle-ci. En effet, tous les paramètres et toutes les opérations devenus inutiles et associés uniquement aux noeuds qui appartiennent à cette branche morte sont supprimés. Dès lors, la formule de calcul amputée de cette branche morte est plus simple et comporte moins de paramètres que la formule de calcul initialement définie. Le code exécutable obtenu à partir de cette formule de calcul amputée est donc également plus simple, moins volumineux et donc plus facile à implémenter dans une carte à puce.

On remarquera que cette simplification de la formule de calcul ne se fait pas au détriment de la complexité et de l'expressivité de la formule de calcul initiale. Ainsi, les formules de calcul initiales peuvent toujours être définies avec une grande liberté de choix quant au nombre de paramètres et à la complexité des opérations réalisées sans que pour autant cela empêche d'obtenir un code exécutable par une carte à puce.

Ainsi, ce procédé résout la contradiction suivante :
1. le besoin de laisser aux fournisseurs de service une grande flexibilité dans la définition des offres tarifaires ce qui implique de laisser la possibilité de définir des offres tarifaires avec un grand nombre de paramètres et des opérations diverses voire complexes, et
2. le besoin de limiter le nombre de paramètres d'une offre tarifaire et la complexité des opérations réalisées pour permettre le portage de cette offre tarifaire dans une carte à puce

Les modes de réalisation de ce procédé de conversion sont definies par les revendications 2 et 3.

L'invention a également pour objet un programme d'ordinateur et un support d'enregistrement comportant des instructions pour l'exécution du procédé ci-dessus de conversion lorsque ces instructions sont exécutées par un calculateur électronique.

L'invention a également pour objet un procédé d'implémentation d'une formule de calcul dans une carte à puce, ce procédé est défini par la revendication 6.

Les modes de réalisation de ce procédé d'implémentation d'une formule de calcul peuvent comporter une ou plusieurs des caractéristiques suivantes :
▪ le procédé comprend :
   - l'association de la taille des codes exécutables déjà téléchargés dans la carte à puce à un identifiant de cette carte à puce,
   - avant la comparaison de l'estimation de la taille totale du code exécutable à la limite préétablie, l'acquisition de l'identifiant de la carte à puce dans laquelle doit être téléchargé le code exécutable et l'établissement de la limite en fonction de la taille du ou des codes exécutables associés à l'identifiant de carte à puce acquis ;
▪ le procédé comprend :
   - le téléchargement dans la carte à puce de plusieurs codes exécutables indépendamment les uns des autres et l'association de chacun de ces codes exécutables à un identifiant de service,
   - la réception par la carte à puce de données de consommation contenant un identifiant du service consommé, et
   - l'exécution par la carte à puce du seul code exécutable correspondant à l'identifiant de service reçu pour calculer le coût du service consommé.

Ces modes de réalisation du procédé d'implémentation présentent en outre les avantages suivants :
- l'établissement de la limite au-delà de laquelle l'utilisateur est informé que l'offre tarifaire ne peut pas être convertie en un code exécutable par la carte à puce en fonction des codes exécutables déjà téléchargés dans cette carte à puce permet d'adapter le procédé de conversion en fonction de la carte à puce à programmer, et
- l'exécution séparée de chaque code exécutable permet l'implémentation, étalée dans le temps, dans la carte à puce de plusieurs formules de calcul, non prédictibles, qui n'auraient pas pu être implémentées dans la carte à puce si un seul et même programme était chargé de faire l'ensemble de ces calculs.

L'invention a également pour objet un convertisseur de formules de calcul tel que définie par la revendication 9.

L'invention sera mieux comprise à la lecture de la description qui va suivre, donnée uniquement à titre d'exemple non limitatif et faite en se référant aux dessins sur lesquels :
- la Figure 1 est une illustration d'un système d'implémentation d'une formule de calcul dans une carte à puce ainsi que d'utilisation de la formule de calcul implantée,
- la Figure 2 est une illustration schématique de l'architecture d'une carte à puce dans laquelle sont implémentées des formules de calcul à l'aide du système de la Figure 1,
- la Figure 3 est un organigramme d'un procédé d'implémentation d'une formule de calcul dans une carte à puce et d'utilisation de cette formule de calcul,
- la Figure 4 est une illustration schématique de la structure arborescente d'une formule de calcul ainsi que du fichier numérique correspondant,
- la Figure 5 est un organigramme d'un procédé de conversion d'une formule de calcul en un code exécutable par la carte à puce.

Dans ces figures, les mêmes références sont utilisées pour désigner les mêmes éléments.

Dans la suite de cette description, les caractéristiques et fonctions bien connues de l'homme du métier ne sont pas décrites en détail.

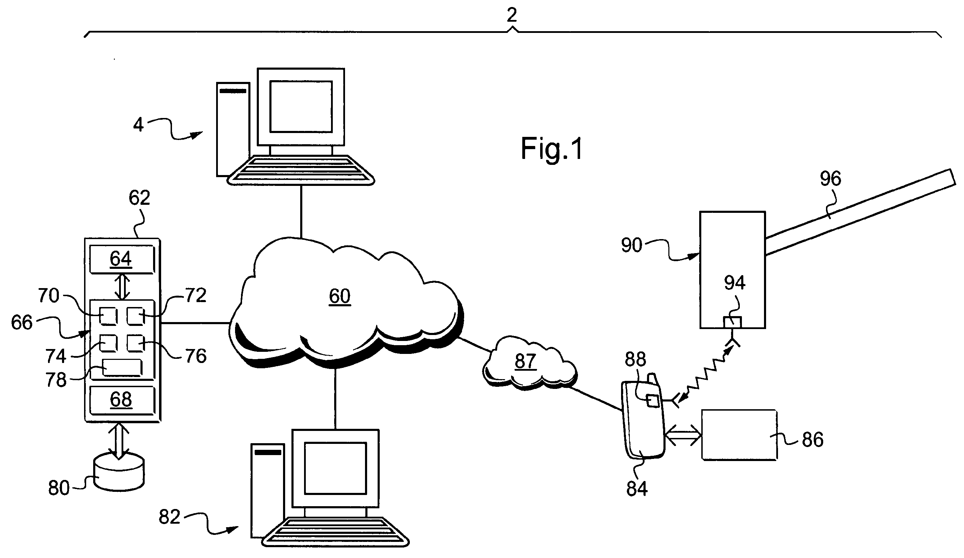

La Figure 1 représente un système 2 d'implémentation et d'utilisation d'une formule de calcul dans une carte à puce.

Ici, la description qui suit est faite dans le cas particulier où la formule de calcul est une formule de calcul du coût d'un service. Elle est donc appelée « offre tarifaire ».

Le système 2 comprend un éditeur électronique 4 d'une offre tarifaire. Par exemple, cet éditeur 4 est celui commercialisé par la société Highdeal. Cet éditeur est par exemple décrit dans la demande de brevet WO 2004/016066.

Cet éditeur 4 permet d'acquérir une offre tarifaire sous la forme d'une structure arborescente et de l'enregistrer dans un format numérique qui conserve la structure arborescente. Pour cela, l'offre tarifaire est enregistrée dans un fichier dans lequel l'offre tarifaire est décrite dans un langage SGML (Standard Generalized Markup Language). Ici, l'offre tarifaire contenue dans le fichier est décrite dans le langage XML (Extensible Markup Language).

La structure arborescente de l'offre tarifaire est librement définissable par un fournisseur de service. Ainsi, la structure même de l'offre tarifaire, c'est-à-dire l'ordre dans lequel les différentes opérations doivent être exécutées n'est pas connu à l'avance.

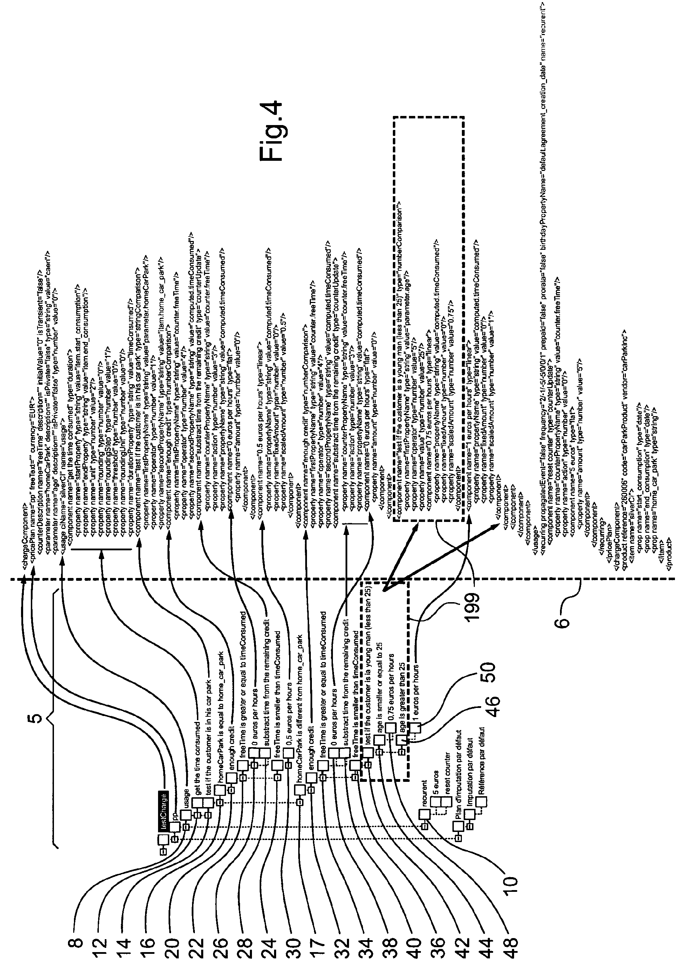

Un exemple d'une offre tarifaire 5 acquise sous la forme d'une structure arborescente est représenté à gauche d'une ligne verticale 6 dans la Figure 4. Ici, cette offre tarifaire 5 est une offre destinée à tarifier le coût de stationnement d'un véhicule soit dans un parking résidentiel soit dans d'autres parkings. Cette offre tarifaire se présente donc sous la forme de noeuds reliés par des arcs à d'autres noeuds jusqu'à un noeud formant une terminaison. Ici, seuls les noeuds importants pour la compréhension de l'invention sont décrits. A droite de chaque noeud, on a indiqué le nom de ce noeud. On retrouve ce nom dans le fichier XML dont le contenu est représenté à droite de la ligne 6.

Cette offre tarifaire se décompose en deux parties principales, une tarification à l'usage et une tarification récurrente. Pour définir ces deux parties, la structure arborescente comporte, respectivement, deux noeuds événementiels 8 et 10.

Le parcours de la structure arborescente à partir du noeud 8 est déclenché en réponse à la réception d'un ticket de consommation émis par un point de vente. Ici, le point de vente est une borne de stationnement payant.

Le parcours de la structure arborescente à partir du noeud 10 est déclenché à intervalle régulier, par exemple, à chaque début de mois.

Le parcours de la structure arborescente se fait toujours dans la direction du noeud racine vers les terminaisons.

Le noeud 8 est relié à deux noeuds fils 12 et 14. Le noeud fils 12 est un noeud associé à une opération d'acquisition de la durée de stationnement.

Le noeud 14 est un noeud de décision. Ici, ce noeud 14 est associé à une opération de branchement conditionnel paramétré. Plus précisément, le noeud 14 est chargé de tester si le véhicule du client est garé dans son parking résidentiel ou au contraire dans un autre parking. Dans le cas où le véhicule est garé dans son parking résidentiel, seul un noeud fils 16 est activé. Dans le cas contraire, seul un noeud fils 18 est activé.

Le noeud 16 est relié à un noeud fils 20 de décision. Ce noeud fils 20 teste si la durée de stationnement est inférieure à une durée de stationnement gratuite. Dans l'affirmative, il active un noeud fils 22 alors que dans le cas contraire seul un noeud fils 24 est activé. Le noeud 22 est relié à deux noeuds fils 26 et 28. Le noeud fils 26 indique que le coût du stationnement est égal à 0€ tandis que le noeud 28 soustrait la durée de stationnement acquise à la durée de stationnement gratuite. Ainsi, la durée de stationnement gratuite diminue au fur et à mesure de la consommation de ce service.

Le noeud 24 active un noeud fils 30 qui multiplie la durée de stationnement au-delà de la durée gratuite autorisée par un taux horaire prédéfini non nul. Ainsi, le noeud 24 est associé à une opération qui calcul le coût du stationnement dans le cas où la durée de stationnement a excédé la durée de stationnement gratuite restante.

Le noeud 18 est relié à un noeud fils 32 de décision identique au noeud 20. Ce noeud 32 est relié à des noeuds fils 34 et 36 respectivement identiques aux noeuds fils 22 et 24. Le noeud 34 est relié à des noeuds fils 38 et 40 respectivement identiques aux noeuds 26 et 28.

Le noeud 36 est relié à un noeud 42 de décision qui teste l'âge du client. L'âge du client est acquis lors de la souscription à cette offre.

Le noeud 42 active un noeud fils 44 si l'âge du client est inférieur ou égal à 25 ans et, en alternance, un noeud fils 46 si l'âge du client est supérieur à 25 ans.

Le noeud 44 est relié à un noeud fils 48 qui calcule le coût du service en multipliant la durée de stationnement qui excède la durée de stationnement gratuite par un taux horaire supérieur à celui utilisé par l'opération associée au noeud 30.

Le noeud 46 est relié à un noeud fils 50 qui calcule le coût du stationnement en multipliant la durée de stationnement qui excède la durée gratuite par un taux horaire supérieur à celui utilisé par le noeud 48.

Cette offre tarifaire contient donc deux paramètres de souscription, à savoir l'âge du client et un identifiant de son parking résidentiel.

Après avoir été acquise, l'offre tarifaire 5 est enregistrée dans un fichier XML dont le contenu est représenté à droite de cette ligne 6. Les flèches qui traversent la ligne 6 indiquent quelles sont les lignes d'instructions en langage XML qui correspondent à chaque noeud de l'offre tarifaire 5.

Dans ce fichier XML, les arcs entre les noeuds sont remplacés par une imbrication des balises, définissant chacun des noeuds, les unes à l'intérieur des autres. Plus précisément, la définition de chaque noeud commence par une balise ouvrante "<component name=.../>" et se termine par une balise fermante "</component>". Entre les balises, ouvrante et fermante, définissant un noeud, on trouve les balises ouvrantes et fermantes des noeuds fils de ce noeud. Ceci permet d'indiquer la relation d'ordre entre ces noeuds.

Ici, chaque balise ouvrante "<component.../>" comprend des attributs "name" et "type". La valeur de l'attribut "name" est égale au nom du noeud.

La valeur de l'attribut "type" indique l'opération qui est associée à ce noeud. Cette valeur correspond à un code prédéterminé et interprétable par un convertisseur d'offre tarifaire.

Les balises "<property.../>", qui se trouvent entre les balises ouvrante et fermante de la définition d'un noeud, définissent le nom des variables et paramètres de l'opération associée au noeud.

L'éditeur 4 est relié par l'intermédiaire d'un réseau de transmission d'informations 60 à un serveur 62. Par exemple, le réseau 60 est le réseau Internet.

Le serveur 62 comprend :
- un module 64 de présentation des offres tarifaires définies à l'aide de l'éditeur 4,
- un convertisseur 66 d'offres tarifaires en code exécutable par une carte à puce, et
- un module 68 de téléchargement du code exécutable construit par le convertisseur 66 dans une carte à puce.

Par exemple, le module 64 est un serveur Internet qui permet de présenter à un consommateur les différentes offres tarifaires disponibles pour les différents services fournis.

En particulier, le module 64 permet au consommateur de sélectionner parmi plusieurs offres tarifaires, celle à laquelle il souhaite souscrire. Le module 64 permet également au consommateur de transmettre l'ensemble des informations permettant la mise en oeuvre de l'offre tarifaire.

Le convertisseur 66 comprend :
- un module 70 d'acquisition des paramètres de souscription transmis par le consommateur au travers des offres présentées par le module 64,
- un vérificateur 72 d'embarquabilité de l'offre tarifaire souscrite dans une carte à puce,
- un analyseur sémantique 74 apte à simplifier l'offre tarifaire en fonction des paramètres de souscription transmis par le client,
- un générateur 76 de code Java JavaCard®, et
- un compilateur 78 de code Java JavaCard® propre à générer une applet exécutable par une carte à puce.

Par exemple, le compilateur 78 est l'un de ceux proposés par la société SUN Microsystem®.

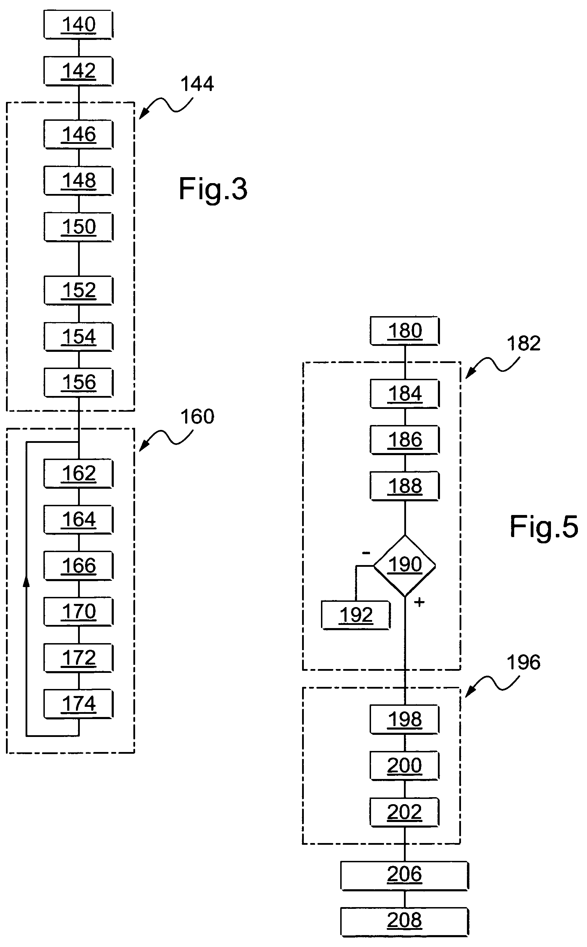

Le serveur 62 est typiquement réalisé à partir de calculateurs programmables aptes à exécuter des instructions enregistrées sur un support d'enregistrement d'informations. Ici, à cet effet, le serveur 62 est raccordé à une mémoire 80 comprenant les instructions nécessaires à l'exécution des procédés des Figures 3 et 5. Plus précisément, ici, le module 64, le convertisseur 66 et le compilateur 68 se présentent sous la forme de programmes d'ordinateur exécutables par le serveur 62 et dont les instructions sont enregistrées dans la mémoire 80.

A titre d'illustration, un seul poste 82 d'abonnement a été représenté. Ce poste 82 est relié au serveur 62 par l'intermédiaire du réseau 60. Typiquement, ce poste d'abonnement est un ordinateur de type PC (Personnal Computer) équipé d'un navigateur Internet. Ce poste est destiné à être utilisé par le client lors de la souscription à une offre tarifaire proposée et présentée par le module 64.

Un terminal mobile 84, équipé d'une carte à puce 86, est également raccordé au serveur 62 par l'intermédiaire du réseau 60 et d'un réseau 87 de téléphonie sans fil. Ce terminal 84 est typiquement un terminal appartenant au client. Par exemple, ici, ce terminal mobile est un téléphone mobile.

Pour simplifier l'illustration, la carte à puce 86 a été représentée à côté du terminal 84. Toutefois, typiquement, elle est logée à l'intérieur du terminal 84. Ici, il s'agit de la carte SIM (Subscriber Identity Module) du téléphone mobile.

Le terminal 84 est équipé d'un émetteur/récepteur courte distance 88. Par exemple, l'émetteur/récepteur 88 est un émetteur radio apte à établir une liaison sans fil avec un point de vente 90. A cet effet, chaque point de vente est également équipé d'un émetteur/récepteur sans fil 94.

Le point de vente 90 est un automate apte à délivrer un service en réponse à la validation de l'achat de ce service transmis par le terminal 84. A titre d'illustration, le point de vente 90 commande l'ouverture d'une barrière 96 permettant au client de sortir d'un parking une fois que celui-ci s'est acquitté du paiement correspondant.

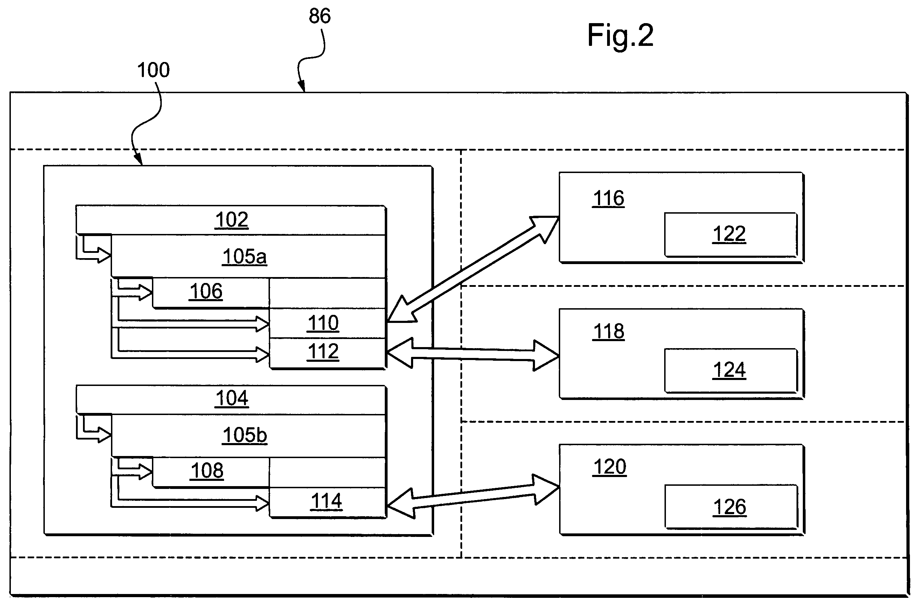

La Figure 2 représente plus en détail la carte à puce 86. La carte à puce 86 est une carte à puce conforme aux spécifications JavaCard®. Elle est capable d'exécuter des applications implémentées dans sa mémoire. Plus précisément, elle est équipée d'une machine virtuelle JavaCard® qui interprète le code exécutable des applications implémentées. Ces applications sont connues sous le terme anglais de "Applet". Ici le terme « code exécutable » est utilisé aussi bien pour désigner un code destiné à être interprété par une machine virtuelle qu'un code destiné à être directement exécuté par un calculateur.

Ici, la carte 86 embarque un moteur de valorisation 100. Ce moteur de valorisation 100 stocke, pour chaque fournisseur de service un certificat. Par exemple, sur la Figure 2, deux certificats 102 et 104 sont représentés. Ces certificats sont des certificats cryptographiques. Chaque certificat contient l'identifiant du fournisseur de service et une clef publique de chiffrement correspondant à la clé privée de ce fournisseur de service.

A chaque fois que le client est abonné à un service d'un fournisseur de service, le moteur 100 comprend un compte d'abonné. Par exemple, sur la figure 2, le moteur 100 comprend deux comptes d'abonné 105a et 105b.

Chaque compte d'abonné est associé au certificat du fournisseur de service. De plus, chaque compte d'abonné possède une ou plusieurs balances ainsi qu'un ou plusieurs liens vers des applications embarquées de calcul de coût.

A titre d'illustration, les comptes 105a et 105b comprennent, respectivement, des balances 106 et 108. Le compte 105a comprend également deux liens 110 et 112. Le compte 105b comprend également un lien 114. Chacun de ces liens pointe vers une application de calcul de coût respective. Par exemple, ici, les liens 110, 112 et 114 pointent respectivement vers les applications 116, 118 et 120. Chacune de ces applications 116, 118 et 120 de calcul de coût est enregistrée dans une mémoire isolée et protégée de manière à ce que l'exécution de ces applications puisse uniquement être lancée à partir des liens contenus dans le moteur 100.

Chacune des applications 116, 118 et 120 gère une mémoire locale non volatile dans laquelle elle peut enregistrer la valeur de différentes variables entre deux exécutions de cette application. Typiquement, cette mémoire locale est utilisée pour enregistrée la valeur des paramètres d'historique de consommation dans des compteurs. Par exemple, les applications 116, 118 et 120 sont respectivement associées à des mémoires locales 122, 124 et 126. Ces mémoires locales 122, 124 et 126 sont réservées à l'usage de l'application à laquelle elles sont associées. Chaque application 116, 118 et 120 correspond à du code exécutable enregistré dans la carte à puce 86. Ce code exécutable est celui obtenu après conversion d'une offre tarifaire en un code exécutable par le convertisseur 66. Ici ce code exécutable est du Bytecode produit par un compilateur JavaCard®.

Le fonctionnement du système 2 va maintenant être décrit plus en détail en regard des procédés des Figures 3 et 5.

Initialement, lors d'une étape 140, un fournisseur de service définit une offre tarifaire à l'aide de l'éditeur 4. Cette offre tarifaire est définie et acquise sous la forme d'une structure arborescente. Par exemple, ici, on suppose qu'il s'agit de l'offre tarifaire 5. Après que l'éditeur 4 ait acquis l'offre tarifaire 5 sous la forme d'une structure arborescente, celle-ci est enregistrée dans le fichier XML tel que décrit en regard de la Figure 4.

Lors d'une étape 142, ce fichier XML est transmis au serveur 62 par l'intermédiaire du réseau 60.

Ensuite, débute une phase 144 de souscription à cette offre tarifaire. Au début de la phase 144, lors d'une étape 146, l'offre tarifaire est présentée à un consommateur par le module 64. Le consommateur utilise à cet effet le poste 82.

Ensuite, lors d'une étape 148, le consommateur sélectionne la ou les offres tarifaires auxquelles il souhaite souscrire et fournit les informations personnelles nécessaires au fonctionnement de cette offre tarifaire. Par exemple, dans le cas de l'offre tarifaire 5, le client doit fournir son âge ainsi que les informations permettant d'identifier le parking qui sera considéré comme son parking résidentiel.

Lors de l'étape 148, le client fournit également les informations permettant d'identifier de façon unique la carte à puce insérée dans son terminal mobile. Par exemple, le numéro MSISDN (Mobile Station ISDN Number) de la carte à puce est fourni. Ainsi, lors de l'étape 148, les valeurs de tous les paramètres de souscription sont transmises au serveur 62.

Ensuite, lors d'une étape 150, le client paie l'offre tarifaire à laquelle il a souscrit.

A partir de ce moment, lors d'une étape 152, le convertisseur 66 convertit l'offre tarifaire souscrite en un code exécutable par la carte à puce du client. Cette étape est décrite plus en détail en regard de la Figure 5.

Si le client est un nouveau client, lors d'une étape 154, un nouveau compte d'abonné est créé dans la carte à puce du client. Lors de cette étape 154, le serveur 62 envoie à la carte à puce 86 le certificat du fournisseur de service via un canal sécurisé. Le moteur 100 enregistre ce certificat et crée également une première balance associée à ce compte d'abonné.

Ensuite, lors d'une étape 156, le module 68 télécharge le code exécutable généré par le convertisseur 66 dans la carte à puce 86. Par exemple, ici, ce code exécutable est enregistré dans la carte à puce 86 comme étant l'application 120. Ensuite, lors de cette étape 156, l'application 120 est activée c'est-à-dire que le lien 114 est créé. Après l'activation de l'application 120, la taille du code exécutable implanté dans la carte à puce 86, associée à un identifiant de cette carte à puce, est enregistrée dans la mémoire 80.

Un compte d'abonné référence le certificat cryptographique d'un fournisseur de service, et possède au moins une balance et au moins un lien vers une application de calcul de coût qui lui est propre.

Le moteur 100 est alors prêt à accumuler sur la balance 108 les coûts calculés par l'application 120.

Débute alors une phase 160 de consommation des services proposés par le fournisseur de service. Plus précisément, initialement, lors d'une étape 162, le client présente son terminal 84 à proximité du point 90 de vente. Une liaison sécurisée de communication s'établit alors entre ce terminal 84 et le point de vente 90 par l'intermédiaire des émetteurs/récepteurs 88 et 94.

Une fois la liaison sécurisée établie, lors d'une étape 164, le point de vente 90 envoie au terminal 84 un ticket de consommation contenant :
- l'identifiant du fournisseur de service,
- l'identifiant du service consommé,
- les données de consommation.

Par exemple, dans le cas d'un stationnement, les données de consommation sont constituées par la durée de stationnement. Typiquement, les données de consommation sont chiffrées avec la clef privée du fournisseur de service.

En réponse à la réception de ces données, lors d'une étape 166, le moteur 100 sélectionne le compte correspondant à l'identifiant du fournisseur. Par exemple, ici, le moteur 100 sélectionne le compte 105b.

Dans le cas où aucun compte n'est associé à l'identifiant de fournisseur reçu, le moteur 100 rejette le service de sorte qu'aucune balance n'est débitée et informe le point de vente 90 de l'impossibilité de procéder au paiement.

Dans le cas contraire, le moteur 100 utilise un défi cryptographique ainsi que le certificat 104 pour authentifier le point de vente 90. Si le point de vente 90 n'est pas correctement authentifié, aucune balance n'est débitée et le service est rejeté.

Dans le cas contraire, lors d'une étape 170, le moteur 100 sélectionne l'application de calcul de coût à exécuter à l'aide de l'identifiant de service. Par exemple, le moteur 100 sélectionne le lien 114 et donc l'application 120.

Lors d'une étape 172, l'application sélectionnée est exécutée à l'intérieur de la carte à puce. Cette application calcule le coût du service à partir des données de consommation contenues dans le ticket de consommation puis renvoie le coût calculé au moteur 100.

Ensuite, lors d'une étape 174, le moteur 100 débite le coût calculé sur la balance 108. Dans le cas où la balance 108 correspond à un compte prépayé qui n'est pas assez approvisionnée, le service est rejeté et aucune balance n'est débitée.

Le procédé de la Figure 5 représente plus en détail le déroulement de l'étape 152 de conversion de l'offre tarifaire en code exécutable.

Initialement, lors d'une étape 180, les paramètres de souscription fournis par le client sont acquis par le module 70. Lors de cette étape, le module 70 acquière également l'identifiant de la carte à puce 86.

Ensuite, lors d'une étape 182, le vérificateur 72 procède à la vérification de l'embarquabilité de l'offre tarifaire souscrite dans la carte à puce du client. Pour cela, lors d'une opération 184, le vérificateur 72 commence à vérifier l'existence de l'ensemble des informations nécessaires pour embarquer cette offre tarifaire dans une carte à puce. En particulier, lors de cette étape 184, le vérificateur 72 vérifie la présence d'informations permettant d'identifier de façon unique la carte 86 et également la présence de valeurs pour l'ensemble des paramètres de souscription contenus dans l'offre tarifaire.

Dans le cas où l'ensemble des informations nécessaires ont été fournies, lors d'une étape 186, le vérificateur 72 estime la taille du code exécutable qui devra être implémenté dans la carte à puce 86. Pour cela, le vérificateur 72 parcourt la structure arborescente de l'offre tarifaire souscrite en accumulant pour chaque noeud rencontré un poids représentatif de la taille du segment de code exécutable à implémenter dans la carte à puce pour exécuter l'opération associée à ce noeud.

Avant la mise en oeuvre du convertisseur 86, ce poids représentatif de la taille du segment de code est déterminé expérimentalement pour chaque noeud susceptible d'être utilisé dans l'éditeur 4 pour définir une offre tarifaire. Ensuite, un tableau associant à chaque noeud le poids représentatif de la taille du segment de code exécutable à implémenter dans la carte à puce pour exécuter l'opération à laquelle il est associé est créé. Lors de l'étape 186, le vérificateur 72 utilisé ce tableau pour déterminer le poids associé à chaque noeud rencontré dans l'offre tarifaire.

Ensuite, lors d'une opération 188, le vérificateur établit la taille de la mémoire libre utilisable pour implémenter une application dans la carte à puce. Lors de cette opération 188, le vérificateur 72 utilise les informations fournies par le client sur sa carte à puce ainsi que des informations contenues dans la mémoire 80 sur les autres offres tarifaires auxquelles le client a déjà souscrit. Par exemple, l'identifiant MSISDN permet de retrouver la taille maximale de la mémoire libre d'une carte à puce. Ensuite, les tailles des codes exécutables déjà téléchargés dans cette carte à puce sont soustraites à cette taille maximale pour établir la limite recherchée. A cet effet, la mémoire 80 contient un tableau qui associe à chaque identifiant de carte à puce d'un client, les tailles des codes exécutables déjà téléchargés dans cette carte.

Ensuite, lors d'une opération 190, le vérificateur 72 compare l'estimation de la taille du code obtenue lors de l'opération 186 à la limite établie lors de l'opération 188. Si l'estimation de la taille du code dépasse la limite établie, alors, lors d'une opération 192, le vérificateur informe le client que l'offre tarifaire à laquelle il souhaite souscrire ne peut pas être embarquée dans sa carte à puce.

Dans le cas contraire, le procédé se poursuit par une étape 196 d'analyse sémantique de l'offre tarifaire à laquelle il a souscrit. Plus précisément, lors d'une opération 198, l'analyseur 74 parcourt l'offre tarifaire du noeud racine vers les terminaisons pour identifier les branches mortes de l'offre tarifaire souscrite. Pour cela, l'analyseur 74 utilise les informations acquises sur la valeur des paramètres de souscription. Par exemple, on suppose ici que le client a indiqué qu'il avait plus de 25 ans. Par conséquent, l'analyseur 74 déduit à partir de cette information que les noeuds 44 et 48 de l'offre tarifaire ne seront jamais parcourus. En effet, les noeuds 44 et 48 ne sont activés que si le client à moins de 25 ans. Ensuite, l'analyseur modifie l'offre tarifaire pour supprimer les branches mortes. Par exemple, ici, les noeuds 42, 44, 48 et 46 sont supprimés et le noeud 50 est directement relié au noeud 36. Cette modification est réalisée en supprimant du fichier XML la définition des noeuds 42, 44, 48 et 46. Cela simplifie l'offre tarifaire.

Sur la Figure 4, les noeuds supprimés sont entourés d'un cadre 199.

Ensuite, après avoir supprimé l'ensemble des branches mortes, lors d'une opération 200, l'analyseur 74 simplifie les opérations paramétrées. Lors de cette opération 200, l'analyseur 74 parcourt l'ensemble des noeuds de l'offre tarifaire et remplace, à chaque fois que cela est possible, les opérations paramétrées à l'aide de paramètres de souscription par une opération dépourvue de paramètres de souscription. Dans cette situation, le paramètre de souscription est également appelé « paramètre d'opération ». En particulier, si une opération associée à un noeud teste la valeur d'un paramètre de souscription pour exécuter un seul traitement parmi plusieurs traitements possibles, cette opération est simplifiée en remplaçant ce test par un pointeur vers le bon traitement à exécuter. Le traitement peut être un simple résultat parmi plusieurs résultats possibles. Cette opération 200 permet donc également de simplifier l'offre tarifaire. En particulier, cette opération permet de simplifier toutes les opérations qui mettent en oeuvre des tests logiques du type « Si A Alors T1 Sinon T2 », où :
- A est la valeur du paramètre de souscription,
- T1 et T2 sont des traitements alternatifs à exécuter.
La simplification d'une telle opération conduit, par exemple, à exécuter systématiquement le traitement T1 sans tester la valeur A.

Enfin, lors d'une opération 202, l'analyseur 74 prépare un squelette de code source à générer. Pour cela, au préalable, chaque opération d'un noeud susceptible d'être utilisée pour définir une offre tarifaire est associée à un fragment de code source en langage JavaCard®. Lors de l'opération 202, l'analyseur parcourt la structure arborescente et pour chaque noeud rencontré ajoute dans un fichier source le code source associé à ce noeud.

Dans le tableau suivant, nous donnons pour différentes opérations associées à un noeud, le pseudo-code correspond utilisable pour créer ce squelette. Ce pseudo-code peut aisément être traduit en instructions JavaCard® ou autre par l'homme du métier.

| Type de noeud | Opérations | Pseudo-codes |
|---|---|---|
| Fonction | Flat | Résultat = variable |
| | Ax+b | Résulat = variable1 * variable2 + variable3 |
| Comparateur | Comparaison de nombres | Si nombre1 = nombre2 |
| | | Alors exécution branche condition-vérifiée |
| | | Sinon |
| | | Execution de la branche condition-non-vérifiée |
| | Comparaison de caractères | Si string1 contient string2 |
| | | Alors exécution branche condition-vérifiée |
| | | Sinon |
| | | Exécution de la branche condition-non-vérifiée |
| | Comparaison | Si le jour de la semaine de la date1 = variable1 |
| | de dates | Alors exécution branche condition-vérifiée |
| | | Sinon |
| | | Exécution de la branche condition-non-vérifiée |
| Partageur | Partage d'une variable en deux variables | Si variable1 <= limite1 |
| | | Alors variableInférieure = variable1 |
| | | variableSupérieure = 0 |
| | | Sinon |
| | | variableInférieure = limite1 |
| | | variableSupérieure = variable1 - limite1 |
| | | Exécution de la branche interval-inférieur |
| | | Exécution de la branche interval-supérieur |
| Opérateur | Calcul d'une | duree_JHMS = date2 - date1 |
| | | durée = convertir (duree_JHMS, unité) |
| | durée entre deux dates | |
| | Table de translation | si variable1 = ligne1 |
| | | résultat = résultatLigne1 |
| | | sinon si variable1 = ligne2 |
| | | résultat = résultatLigne2 |
| | | sinon ... |

Le nom des variables ainsi qu'éventuellement leurs valeurs sont définis lors de la création de l'offre tarifaire et enregistrés dans le fichier XML. Ici, c'est le rôle des balises <Property .../>.

Ensuite, lors d'une étape 206, le générateur 76 parcourt l'offre tarifaire pour:
- remplacer dans le squelette de code source l'ensemble des paramètres de souscription par leurs valeurs telles qu'acquises par le module 70, et
- relier entre eux les différents segments de code source.

Relier les différents segments de code source entre eux consiste notamment à indiquer comment doivent être enchaînées les opérations.

Ainsi, à l'issue de l'étape 206, le générateur 76 a généré un code source complet en langage JavaCard® qui correspond à l'offre tarifaire à laquelle le client a souscrit.

Enfin, lors d'une étape 208, le compilateur 78 compile le code source pour obtenir un Bytecode plus connu sous le terme de "applet JavaCard®".

Dans les étapes précédentes, le parcourt de la structure arborescente est mis en oeuvre en utilisant le motif de conception « Visiteur » (« Visitor Design Pattern » en anglais). Pour plus d'informations sur ce motif, il est possible de se référer à des encyclopédies telles que Wikipedia®.

De nombreux autres modes de réalisation sont possibles. Par exemple, les différentes étapes et opérations décrites ici peuvent être exécutées dans un ordre différent. Typiquement, la vérification de l'embarquabilité du code exécutable peut être réalisée après l'analyse sémantique.

L'analyseur sémantique 74 peut réaliser une simplification de l'offre tarifaire soit en supprimant seulement les branches mortes, soit en se contentant simplement de simplifier les opérations associées à chaque noeud à partir de la connaissance de la valeur des paramètres de souscription.

Le terminal 84 peut aussi être un PDA (Personal Digital Assistant) ou un ordinateur portable ou tout appareil équipé d'une carte à puce (« CAD Card Accepting Device »).

La communication entre le terminal 84 et le serveur 62 peut se faire par l'intermédiaire de tout type de réseau de transmission d'informations. En particulier, il n'est pas nécessaire d'utiliser un réseau de téléphonie sans fil.

Le module 64 peut être implémenté dans un serveur distinct du serveur 62.

Ce qui a été décrit en détail dans le cas particulier d'une offre tarifaire, s'applique à toute formule de calcul dont la structure arborescente est enregistrée dans un format numérique.

Le client peut souscrire à plusieurs offres tarifaires. L'implémentation et l'utilisation de chacune de ces offres tarifaires sont, par exemple, identique à ce qui a été décrit en regard des Figures 3 et 5. En particulier, lorsque plusieurs offres tarifaires sont implémentées dans la même carte à puce, ces offres tarifaires sont exécutées une seule à la fois et indépendamment les unes des autres. Ceci permet d'implémenter des offres tarifaires différentes beaucoup plus nombreuses que si l'on utilise, comme dans la demande de brevet WO 02/08863, une seule application de calcul de coût chargée de calculer tous les montants à accumuler et ceci quel que soit le service à payer. En effet, cela suppose que cette unique application incorpore dans son code exécutable l'ensemble des offres tarifaires auxquelles le client a souscrit. La complexité de cette unique application croit donc en fonction du nombre d'offres tarifaires différentes disponibles. Avec le procédé décrit ici ce n'est pas le cas. En effet, seule l'application spécifiquement associée à un service est exécutée. Ainsi, la complexité du code exécutable présent dans la carte, n'augmente pas en fonction du nombre d'offres tarifaires auxquelles le client a souscrit. Cette caractéristique consistant à implémenter dans la carte à puce plusieurs codes exécutables, indépendamment les uns des autres, d'applications de calcul de coût et à exécuter uniquement le code exécutable associé au service à payer peut être mise en oeuvre indépendamment du procédé de conversion décrit en regard de la Figure 5. Cette caractéristique peut également s'appliquer à des formules de calcul, en particulier des formules de calcul de coût, qui ne sont pas acquises et enregistrées sous la forme d'une structure arborescente.

## Revendications

1. Procédé de conversion d'une formule de calcul en un code exécutable par une carte à puce, cette formule de calcul:
• ayant été acquise sous la forme d'une structure arborescente formée de noeuds reliés entre eux par des arcs, chaque noeud étant associé à une opération de calcul et les relations par arc définissant l'ordre dans lequel ces opérations de calcul doivent être réalisées, cette structure arborescente contenant au moins un noeud associé à une opération de branchement conditionnel paramétré et relié à au moins un premier et un deuxième noeuds fils de manière à ce que, en fonction de la valeur d'un paramètre conditionnel, seule l'opération du premier noeud fils et, en alternance, seule l'opération du second noeud fils est exécutée, le noeud fils qui est associé à l'opération qui n'est pas exécutée et l'ensemble des noeuds qui ont ce noeud fils comme noeud parent étant appelés "branche morte", et cette structure arborescente comprenant en plus au moins un noeud de traitement associé à une opération paramétrée qui comprend plusieurs traitements alternatifs exécutables en alternance, chaque traitement alternatif étant associé à une valeur particulière ou à une plage particulière de valeurs d'un paramètre d'opération de manière à ce que ce traitement alternatif soit exécuté uniquement lorsque le paramètre d'opération prend cette valeur ou est compris dans cette plage de valeurs,
• ayant été enregistrée dans un format numérique structuré qui conserve la structure arborescente de la formule de calcul acquise,
ce procédé comprenant:
• l'acquisition (180) de la valeur du paramètre conditionnel, et de la valeur de ce paramètre d'opération,
**caractérisé en ce que** le procédé comprend:
• l'association à chaque noeud possible pour définir une formule de calcul d'un poids représentatif de la taille du fragment de code exécutable à implémenter dans la carte à puce pour exécuter l'opération associée à ce noeud,
• l'estimation (186) de la taille totale du code exécutable à implémenter dans la carte à puce pour exécuter la formule de calcul à partir du poids associé à chacun des noeuds de cette formule de calcul,
• la comparaison (190) de cette estimation de la taille totale du code exécutable à une limite préétablie,
• l'affichage (192) d'informations sur le franchissement de cette limite lorsque cette limite est franchie,
si cette limite est pas franchie le procédé comprend:
• l'identification et la suppression (198) de la branche morte correspondant à la valeur acquise du paramètre conditionnel pour obtenir une formule de calcul amputée de cette branche morte,
• le remplacement (200) de l'opération paramétrée du noeud de traitement par une opération dépourvue du ou des traitements alternatifs associés aux valeurs que le paramètre d'opération ne peut plus prendre à la vue de sa valeur acquise, et
• la compilation (208) de la formule de calcul amputée de la branche morte pour obtenir le code exécutable par la carte à puce, et dans la formule de calcul l'opération paramétrée du noeud de traitement est remplacée par l'opération dépourvue du ou des traitements alternatifs.

2. Procédé selon l'une quelconque des revendications précédentes, dans lequel le format numérique structuré qui conserve la structure arborescente est un format issu du langage SGML (Standard Generalized Markup Language) telle que le format XML (eXtensible Markup Language).

3. Procédé selon l'une quelconque des revendications précédentes, dans lequel la formule de calcul est une formule de calcul du coût d'un service.

4. Programme d'ordinateur, **caractérisé en ce qu'**il comporte des instructions pour l'exécution d'un procédé de conversion d'une formule de calcul en un code exécutable par une carte à puce conforme à l'une quelconque des revendications précédentes, lorsque ces instructions sont exécutées par un calculateur électronique.

5. Support d'enregistrement d'informations, **caractérisé en ce qu'**il comporte des instructions pour l'exécution d'un procédé de conversion d'une formule de calcul en un code exécutable par une carte à puce conforme à l'une quelconque des revendication 1 à 3, lorsque ces instructions sont exécutées par un calculateur électronique.

6. Procédé d'implémentation d'une formule de calcul dans une carte à puce, ce procédé comprenant:
• la conversion (152) de la formule de calcul en un code exécutable par la carte à puce à l'aide d'un procédé conforme à l'une quelconque des revendications 1 à 3,
• le téléchargement (156) du code exécutable dans la carte à puce, puis
• l'exécution (172) de cette formule de calcul dans cette carte à puce en réponse à la réception de données de consommation d'un service pour calculer un coût du service consommé.

7. Procédé selon la revendication 6, dans lequel le procédé comprend:
• la conversion (152) de la formule de calcul en un code exécutable selon un procédé conforme à la revendication 1,
• l'association de la taille des codes exécutables déjà téléchargés dans la carte à puce à un identifiant de cette carte à puce,
• avant la comparaison de l'estimation de la taille totale du code exécutable à la limite préétablie, l'acquisition (180) de l'identifiant de la carte à puce dans laquelle doit être téléchargé le code exécutable et l'établissement (188) de la limite en fonction de la taille du ou des codes exécutables associés à l'identifiant de carte à puce acquis.

8. Procédé selon la revendication 6 ou 7, dans lequel le procédé comprend:
• le téléchargement (156) dans la carte à puce de plusieurs codes exécutables indépendamment les uns des autres et l'association de chacun de ces codes exécutables à un identifiant de service,
• la réception (164) par la carte à puce de données de consommation contenant un identifiant du service consommé, et
• l'exécution (172) par la carte à puce du seul code exécutable correspondant à l'identifiant de service reçu pour calculer le coût du service consommé.

9. Convertisseur d'une formule de calcul en un code exécutable par une carte à puce, cette formule de calcul:
• ayant été acquise sous la forme d'une structure arborescente formée de noeuds reliés entre eux par des arcs, chaque noeud étant associé à une opération de calcul et les relations par arc définissant l'ordre dans lequel ces opérations de calcul doivent être réalisées, cette structure arborescente contenant au moins un noeud associé à une opération de branchement conditionnel paramétré et relié à au moins un premier et un deuxième noeuds fils de manière à ce que, en fonction de la valeur d'un paramètre conditionnel, seule l'opération du premier noeud fils et, en alternance, seule l'opération du second noeud fils est exécutée, le noeud fils qui est associé à l'opération qui n'est pas exécutée et l'ensemble des noeuds qui ont ce noeud fils comme noeud parent étant appelés "branche morte", et cette structure arborescente comprenant en plus au moins un noeud de traitement associé à une opération paramétrée qui comprend plusieurs traitements alternatifs exécutables en alternance, chaque traitement alternatif étant associé à une valeur particulière ou à une plage particulière de valeurs d'un paramètre d'opération de manière à ce que ce traitement alternatif soit exécuté uniquement lorsque le paramètre d'opération prend cette valeur ou est compris dans cette plage de valeurs, et
Le convertisseur comprenant, un module (70) d'acquisition de la valeur du paramètre conditionel et de la valeur de ce paramètre d'opération.
• ayant été enregistrée dans un format numérique structuré qui conserve la structure arborescente de la formule de calcul acquise,
**caractérisé en ce que** ce convertisseur comprend:
• un vérificateur (72) apte à associer à chaque noeud possible pour définir une formule de calcul d'un poids représentatif de la taille du fragment de code exécutable à implémenter dans la carte à puce pour exécuter l'opération associée à ce noeud,
• le vérificateur (72) apte à estimer (186) la taille totale du code exécutable à implémenter dans la carte à puce pour exécuter la formule de calcul à partir du poids associé à chacun des noeuds de cette formule de calcul,
• le vérificateur (72) apte à comparer (190) cette estimation de la taille totale du code exécutable à une limite préétablie,
• le vérificateur (72) apte à afficher (192) informations sur le franchissement de cette limite lorsque cette limite est franchie,
si cette limite est pas franchie le convertisseur comprend:
• un module (70) d'acquisition de la valeur du paramètre conditionnel, et de la valeur de ce paramètre d'opération,
• un analyseur sémantique (74) apte à identifier et à supprimer la branche morte correspondant à la valeur acquise du paramètre conditionnel pour obtenir une formule de calcul amputée de cette branche morte,
• l'analyseur sémantique (74) apte à remplacer l'opération paramétrée du noeud de traitement par une opération dépourvue du ou des traitements alternatifs associés aux valeurs que le paramètre d'opération ne peut plus prendre à la vue de sa valeur acquise, et
• un générateur de code/compilateur (76, 78) apte à compiler la formule de calcul amputée de la branche morte pour obtenir le code exécutable par la carte à puce, et dans la formule de calcul l'opération paramétrée du noeud de traitement est remplacée par l'opération dépourvue du ou des traitements alternatifs.

## Patentansprüche

1. Verfahren zur Umsetzung einer Berechnungsformel in einen Code, der durch eine Chipkarte ausführbar ist, wobei diese Berechnungsformel:
• in der Form einer Baumstruktur erfasst wurde, die aus Knoten gebildet ist, die untereinander durch Bögen verbunden sind, wobei jeder Knoten einer Rechenoperation zugehörig ist, und die Beziehungen pro Bogen die Reihenfolge definieren, in der diese Rechenoperationen ausgeführt werden müssen, wobei diese Baumstruktur mindestens einen Knoten enthält, der einer Operation zur parametrisierten bedingungsabhängigen Verzweigung zugehörig ist und mit mindestens einem ersten und einem zweiten untergeordneten Knoten verbunden ist, derart, dass, in Abhängigkeit von dem Wert eines bedingungsabhängigen Parameters einzig die Operation des ersten untergeordneten Knotens und, im Wechsel, einzig die Operation des zweiten untergeordneten Knotens ausgeführt wird, wobei der untergeordnete Knoten, der der Operation zugehörig ist, die nicht ausgeführt wird, und die Menge der Knoten, die diesen untergeordneten Knoten als übergeordneten Knoten aufweisen, "toter Zweig" genannt werden, und diese Baumstruktur überdies mindestens einen Verarbeitungsknoten umfasst, der einer parametrisierten Operation zugehörig ist, die mehrere alternative Verarbeitungen umfasst, die im Wechsel ausgeführt werden können, wobei jede alternative Verarbeitung einem bestimmten Wert oder einem bestimmten Bereich von Werten eines Operationsparameters zugehörig ist, derart, dass diese alternative Verarbeitung einzig ausgeführt wird, wenn der Operationsparameter diesen Wert annimmt oder in diesem Bereich von Werten enthalten ist,
• in einem strukturierten digitalen Format aufgezeichnet wurde, das die Baumstruktur der erfassten Berechnungsformel bewahrt,
wobei dieses Verfahren Folgendes umfasst:
• die Erfassung (180) des Wertes des bedingungsabhängigen Parameters und des Werts dieses Operationsparameters,
**dadurch gekennzeichnet, dass** das Verfahren Folgendes umfasst:
• die Verknüpfung eines Gewichts, das für die Größe des Fragments des ausführbaren Codes charakteristisch ist, der in der Chipkarte zu implementieren ist, mit jedem möglichen Knoten, um eine Berechnungsformel zu definieren, um die diesem Knoten zugehörige Operation auszuführen,
• die Schätzung (186) der Gesamtgröße des ausführbaren Codes, der in der Chipkarte zu implementieren ist, um die Berechnungsformel ausgehend von dem Gewicht auszuführen, das jedem der Knoten dieser Berechnungsformel zugehörig ist,
• den Vergleich (190) dieser Schätzung des Gesamtgewichts des ausführbaren Codes mit einer vorhergehend festgelegten Grenze,
• die Anzeige (192) von Informationen über die Überschreitung dieser Grenze, wenn diese Grenze überschritten wird,
wobei das Verfahren, wenn diese Grenze nicht überschritten wird, Folgendes umfasst:
• die Identifikation und die Beseitigung (198) des toten Zweiges, der dem erfassten Wert des bedingungsabhängigen Parameters entspricht, um eine Berechnungsformel zu erhalten, von der dieser tote Zweig abgetrennt wurde,
• die Ersetzung (200) der parametrisierten Operation des Verarbeitungsknotens durch eine Operation ohne die alternative/n Verarbeitung/en, die den Werten zugehörig ist/sind, die der Operationsparameter im Hinblick auf seinen erfassten Wert nicht mehr annehmen kann, und
• die Kompilierung (208) der Berechnungsformel, von der der tote Zweig abgetrennt wurde, um einen durch die Chipkarte ausführbaren Code zu erhalten, und in der Berechnungsformel wird die parametrisierte Operation des Verarbeitungsknotens durch die Operation ohne die alternative/n Verarbeitung/en ersetzt.

2. Verfahren nach einem der vorhergehenden Ansprüche, wobei das strukturierte digitale Format, das die Baumstruktur bewahrt, ein Format ist, das von der Sprache SGML (Standard Generalized Markup Language) stammt, wie das Format XML (eXtensible Markup Language).

3. Verfahren nach einem der vorhergehenden Ansprüche, wobei die Berechnungsformel eine Formel zur Berechnung der Kosten eines Dienstes ist.

4. Computerprogramm, **dadurch gekennzeichnet, dass** es Befehle zur Ausführung eines Verfahrens zur Umsetzung einer Berechnungsformel in einen durch eine Chipkarte ausführbaren Code nach einem der vorhergehenden Ansprüche umfasst, wenn diese Befehle durch einen elektronischen Rechner ausgeführt werden.

5. Informationsaufzeichnungsmedium, **dadurch gekennzeichnet, dass** es Befehle zur Ausführung eines Verfahrens zur Umsetzung einer Berechnungsformel in einen durch eine Chipkarte ausführbaren Code nach einem der Ansprüche 1 bis 3 umfasst, wenn diese Befehle durch einen elektronischen Rechner ausgeführt werden.

6. Verfahren zur Implementierung einer Berechnungsformel in einer Chipkarte, wobei dieses Verfahren Folgendes umfasst:
• die Umsetzung (152) der Berechnungsformel in einen durch die Chipkarte ausführbaren Code mittels eines Verfahrens nach einem der Ansprüche 1 bis 3,
• das Herunterladen (156) des ausführbaren Codes in der Chipkarte, und dann
• die Ausführung (172) dieser Berechnungsformel in dieser Chipkarte als Reaktion auf den Empfang von Nutzungsdaten eines Dienstes zum Berechnen der Kosten des genutzten Dienstes.

7. Verfahren nach Anspruch 6, wobei das Verfahren Folgendes umfasst:
• die Umsetzung (152) der Berechnungsformel in einen ausführbaren Code nach einem Verfahren nach Anspruch 1,
• die Verknüpfung der Größe der ausführbaren Codes, die bereits in die Chipkarte geladen wurden, mit einer Kennung dieser Chipkarte,
• vor dem Vergleich der Schätzung der Gesamtgröße des ausführbaren Codes mit der vorhergehend festgelegten Grenze, die Erfassung (180) der Kennung der Chipkarte, in die der ausführbare Code heruntergeladen werden muss, und die Festlegung (188) der Grenze in Abhängigkeit von der Größe des oder der ausführbaren Codes, der/die der erfassten Kennung der Chipkarte zugehörig ist/sind.

8. Verfahren nach Anspruch 6 oder 7, wobei das Verfahren Folgendes umfasst:
• das Herunterladen (156) mehrerer Codes, die unabhängig voneinander ausführbar sind, in die Chipkarte und die Verknüpfung von jedem dieser ausführbaren Codes mit einer Dienstkennung,
• den Empfang (164) von Nutzungsdaten, die eine Kennung des genutzten Dienstes enthalten, durch die Chipkarte, und
• die Ausführung (172) des einzigen ausführbaren Codes, der der empfangenen Dienstkennung entspricht, durch die Chipkarte, um die Kosten des genutzten Dienstes zu berechnen.

9. Umsetzer für eine Berechnungsformel in einen durch eine Chipkarte ausführbaren Code, wobei diese Berechnungsformel:
• in der Form einer Baumstruktur erfasst wurde, die aus Knoten gebildet ist, die untereinander durch Bögen verbunden sind, wobei jeder Knoten einer Rechenoperation zugehörig ist, und die Beziehungen pro Bogen die Reihenfolde definieren, in der diese Rechenoperationen ausgeführt werden müssen, wobei diese Baumstruktur mindestens einen Knoten enthält, der einer Operation zur parametrisierten bedingungsabhängigen Verzweigung zugehörig ist und mit mindestens einem ersten und einem zweiten untergeordneten Knoten verbunden ist, derart, dass, in Abhängigkeit von dem Wert eines bedingungsabhängigen Parameters einzig die Operation des ersten untergeordneten Knotens und, im Wechsel, einzig die Operation des zweiten untergeordneten Knotens ausgeführt, wird, wobei der untergeordnete Knoten, der der Operation zugehörig ist, die nicht ausgeführt wird, und die Menge der Knoten, die diesen untergeordneten Knoten als übergeordneten Knoten aufweisen, "toter Zweig" genannt werden, und diese Baumstruktur überdies mindestens einen Verarbeitungsknoten umfasst, der einer parametrisierten Operation zugehörig ist, die mehrere alternative Verarbeitungen umfasst, die im Wechsel ausgeführt werden können, wobei jede alternative Verarbeitung einen bestimmten Wert oder einem bestimmten Bereich von Werten eines Operationsparameters zugehörig ist, derart, dass die diese alternative Verarbeitung einzig ausgeführt wird, wenn der Operationsparameter diesen Wert annimmt oder die diesem Bereich von Werten enthalten ist, und wobei der Umsetzer ein Modul (70) zur Erfassung des Werts des bedingungsabhängigen Parameters une des Werts dieses Operationsparameters umfasst,
• in einem strukturierten digitalen Format aufgezeichnet wurde, das die Baumstruktur der erfassten Berechnungsformel bewahrt,
**dadurch gekennzeichnet, dass** dieser Umsetzer Folgendes umfasst:
• eine Überprüfungseinrichtung (72), die zum Verknüpfen eines Gewichts, das für die Größe des Fragments des ausführbaren Codes charakteristisch ist, der in der Chipkarte zu implementieren ist, mit jedem möglichen Knoten geeignet ist, um eine Berechnungformel zu definieren, um die Operation auszuführen, die diesem Knoten zugehörig ist,
• wobei die Überprüfungseinrichtung (72) geeignet ist, die Gesamtgröße des ausführbaren Codes, der in der Chipkarte zu implementieren ist, um die Berechnungsformel auszuführen, ausgehend von dem Gewicht zu schätzen (186), das jedem der Knoten dieser Berechnungsformel zugehörig ist,
• wobei die Überprüfungseinrichtung (72) geeignet ist, diese Schätzung der Gesamtgröße des ausführbaren Codes mit einer vorhergehend festgelegten Grenze zu vergleichen (190),
• wobei die Überprüfungseinrichtung (72) geeignet ist, Informationen über die Überschreitung dieser Grenze anzuzeigen (192), wenn diese Grenze überschritten wird,
wobei, wenn diese Grenze nicht überschritten wird, der Umsetzer Folgendes umfasst:
• ein Modul (70) zur Erfassung des Werts des bedingungsabhängigen Parameters und des Werts dieses Operationsparameters,
• eine Semantikanalysator (74), der geeignet ist, den toten Zweig, der dem erfassten Wert des bedingungsabhängigen Parameters entspricht, zu identifizieren und zu beseitigen, um eine Berechnungsformel zu erhalten, von der dieser tote Zweig abgetrennt wurde,
• wobei der Semantikabalysator (74) geeignet ist, die parametrisierte Operation des Verarbeitungsknotens durch eine Operation ohne die anternative/n Verarbeitung/en zu ersetzen, die den Werten zugehörig ist/sind, die der Operationsparameter im Hinblick auf seinen erfassten Wert nicht mehr annehmen kann, und
• einen Codegenerator/Compiler (76, 78), der geeignet ist, die Berechnungformel zu kompilieren, von der der tote Zweig abgetrennt wurde, um den durch die Chipkarte ausführbaren Code zu erhalten, und die der Berechnungsformel wird die parametrisierte Berechnunsoperation des Verarbeitungsknotens durch die Operation ohne die alternative/n Verarbeitung/en ersetzt.

## Claims

1. A method for converting a computational formula into a code executable by a smart card, this computational formula:
• having been acquired in the form of a tree structure made up of nodes interconnected by branches, each node being associated with a computational operation and the branch connections defining the order in which these computational operations must be carried out, said tree structure containing at least one node associated with a parameterized conditional branching operation and connected to at least one first and one second child node, so that as a function of the value of a conditional parameter, only the operation of the first child node and, alternatively, only the operation of the second child node is executed, the child node which is associated with the operation which is not executed and the set of nodes which have this child node as parent node being called a "dead branch", and this tree structure comprising, in addition, at least one processing node associated with a parameterized operation which includes several alternative and alternatively executable processes, each alternative process being associated with a particular value or with a particular range of operational parameter values so that this alternative process is only executed when the operational parameter matches this value or is included in this range of values,
• having been recorded in a structured digital format which retains the tree structure of the computational formula acquired,
this method including
• the acquisition (180) of the value of the conditional parameter, and of the value of said operational parameter,
**characterized in that** the method includes:
• the association with each possible node for defining a computational formula of a weight representing the size of the executable code fragment to be implemented in the smart card, in order to execute the operation associated with the respective node,
• the estimation (186) of the total size of the executable code to be implemented in the smart card, in order to execute the computational formula as of the weight associated with each of the nodes of this computational formula,
• the comparison (190) of this estimation of the total size of the executable code with a preset limit,
• the displaying (192) of information regarding the exceeding of this limit when said limit is exceeded,
if this limit is not exceeded the method includes:
• the identification and the deletion (198) of the dead branch corresponding to the acquired value of the conditional parameter in order to obtain a computational formula pruned from this dead branch,
• the replacement (200) of the parameterized operation of the processing node by an operation free of the alternative process(es) associated with the values that the operational parameter can no longer take due to its acquired value, and
• the compilation (208) of the computational formula pruned from the dead branch to obtain the code executable by the smart card, and in the computational formula the parameterized operation of the processing node is replaced by the operation free of alternative process(es).

2. The method according to any one of the preceding claims, wherein the structured digital format which retains the tree structure is a format stemming from the SGML language (Standard Generalized Markup Language) such as the XML format (eXtensible Markup Language).

3. The method according to any one of the preceding claims, wherein the computational formula is a formula for calculating the cost of a service.

4. A computer program, **characterized in that** it includes commands for the execution of a method for converting a computational formula into a code executable by a smart card according to any one of the preceding claims, where these commands are executed by an electronic calculator.

5. An information recording medium, **characterized in that** it includes commands for the execution of a method for converting a computational formula into a code executable by a smart card according to any one of Claims 1 to 3, where these commands are executed by an electronic calculator.

6. A method for implementing a computational formula in a smart card, said method including
• the conversion (152) of the computational formula into a code executable by the smart card using a method according to any one of Claims 1 to 3,
• the downloading (156) of the executable code into the smart card, then
• the executing (172) of this computational formula in said smart card in response to the receipt of consumption data from a service in order to calculate a cost for the service consumed.

7. The method according to Claim 6, wherein the method includes:
• the conversion (152) of the computational formula into an executable code in accordance with a method according to Claim 1,
• the association of the size of the executable codes which have already been downloaded into the smart card with a user name for this smart card,
• before the comparison of the estimation of the total size of the executable code with the preset limit, the acquisition (180) of the user name from the smart card to which the executable code must be downloaded and the establishment (188) of the limit based on the size of the executable code(s) associated with the smart card user name acquired.

8. The method according to Claim 6 or 7, wherein the method includes:
• the downloading (156) into the smart card of several executable codes independently of each other and the association of each of these executable codes with a service user name,
• the receipt (164) by the smart card of consumption data containing a user name for the service consumed, and
• the execution (172) by the smart card of the single executable code corresponding to the service user name received in order to calculate the cost of the service consumed.

9. A converter for converting a computational formula into a code executable by a smart card, said computational formula:
• having been acquired in the form of a tree structure made up of nodes interconnected by branches, each node being associated with a computational operation and the branch connections defining the order in which these computational operations must be carried out, said tree structure containing at least one node associated with a parameterized conditional branching operation and connected to at least one first and one second child node, so that as a function of the value of a conditional parameter, only the operation of the first child node and, alternatively, only the operation of the second child node is executed, the child node which is associated with the operation which is not executed and the set of nodes which have this child node as parent node being called a "dead branch", and this tree structure comprising, in addition, at least one processing node associated with a parameterized operation which includes several alternative and alternatively executable processes, each alternative process being associated with a particular value or with a particular range of operational parameter values so that this alternative process is only executed when the operational parameter matches this value or is included in this range of values, and the converter including a module (70) for acquiring the value of the conditional parameter and the value of said operational parameter,
• having been recorded in a structured digital format which retains the tree structure of the computational formula acquired,
**characterized in that** said converter includes:
• a verifier (72) capable of associating with each possible node for defining a computational formula for a weight representing the size of the executable code fragment to be implemented in the smart card, in order to execute the operation associated with the respective node,
• the verifier (72) being capable of estimating (186) the total size of the executable code to be implemented in the smart card, in order to execute the computational formula as of the weight associated with each of the nodes of this computational formula,
• the verifier (72) being capable of comparing (190) this estimation of the total size of the executable code with a preset limit,
• the verifier (72) being capable of displaying (192) information regarding the exceeding of this limit when said limit is exceeded,
if this limit is not exceeded the converter includes:
• a module (70) for acquiring the value of the conditional parameter, and the value of said operational parameter,
• a semantic analyzer (74) capable of identifying and removing the dead branch corresponding to the value acquired from the conditional parameter to obtain a computational formula pruned from said dead branch, • the semantic analyzer (74) being capable of replacing the parameterized operation of the processing node by an operation free of the alternative process(es) associated with the values that the operational parameter can no longer take due to its acquired value,
and
• a code generator/compiler (76, 78) which is capable of compiling the computational formula pruned from the dead branch in order to obtain the code executable by the smart card, and in the computational formula the parameterized operation of the processing node is replaced by the operation free of alternative process(es).
